Europäisches Patentamt

European Patent Office

Office européen des brevets

(11) Publication number: **0 140 334**
**B1**

# (12) EUROPEAN PATENT SPECIFICATION

(45) Date of publication of patent specification: **21.03.90**

(51) Int. Cl.⁵: **G 01 P 15/12**

(21) Application number: **84112806.9**

(22) Date of filing: **24.10.84**

(54) Accelerometer.

(30) Priority: **28.10.83 US 546258**

(43) Date of publication of application:
**08.05.85 Bulletin 85/19**

(45) Publication of the grant of the patent:
**21.03.90 Bulletin 90/12**

(84) Designated Contracting States:
**DE FR GB IT**

(56) References cited:
**GB-A-2 020 810**
**SU-A- 534 694**
**US-A-3 636 774**

**IEEE TRANSACTIONS ON ELCTRON DEVICES,
vol. ED-26, 1979, pages 1911-1917, New York,
US; L.M. ROYLANCE et al.: "A batch-fabricated
silicon accelerometer"**

**ELECTRONIC ENGINEERING, vol. 46, no. 562,
December 1974, pages 48,49, London, GB; M.G.
SMART: "Analogue distance indicating device"**

(73) Proprietor: **HONEYWELL INC.**
**Honeywell Plaza**
**Minneapolis Minnesota 55408 (US)**

(72) Inventor: **Aske, Vernon H.**
**3415 Arbor Lane**
**Minnetonka Minnesota 55343 (US)**

(74) Representative: **Rentzsch, Heinz et al**
**Honeywell Europe S.A. Holding KG Patent- und
Lizenzabteilung Kaiserleistrasse 55**
**D-6050 Offenbach am Main (DE)**

Courier Press, Leamington Spa, England.

## Description

This invention relates to instruments for measuring accelerations, particularly linear accelerations of small magnitude. Devices responsive to linear acceleration perform essential sensing functions in a wide variety of systems. As performance requirements and available technology have advanced, the demand has increased for sensors chracterized by much improved sensitivity, stability, accuracy, linearity of response, reliability, and ruggedness, in addition to fast reaction time, minimum cross-coupling, small size, and low cost. Implicit in the stability, sensitivity, and linearity requirements is a requirement that precision be maintained over a wide temperature range. The present state of the art is such that it has been difficult to achieve improvements in all of the foregoing characteristics simultaneously, or, in some instances, even to achieve improvement on one characteristic without adversely affecting another. Nevertheless, requirements exist, particularly in aircraft navigation and missile guidance systems, for an acceleration sensor with superior performance in all the noted areas.

An accelerometer of the kind as described in the preamble of claim 1 is known from SU—A 534 694. This accelerometer comprises an inertia plate carrying a weight connected to a support plate by a pair of flexure sites carrying strain responsive resistors at the same surface of flexures and positioned so that upon acceleration of the weight in a direction perpendicular to the support plate one pair of strain responsive resistors is subject to compression whereat the other pair of strain responsive resistors is subject to tensile stress. For achieving a compound bending of the flexures under the influence of acceleration two oppositely oriented U-shaped gaps are provided between the support plate and the inertia plate such that between the outer U and the inner U flexure the sites are formed.

Furthermore IEEE TRANSACTIONS ON ELECTRON DEVICES Vol. ED—26, 1979 pp. 1911—1917 describes a batch-fabricated silicon accelerometer having a very thin silicon cantilevered beam surrounded by a rim providing a rigid support for one end of the beam. A resistive half-bridge composed of two p-type resistors is provided with one resistor centered on the top surface of the beam and the other placed in an unstressed region of the rim.

A dual mass accelerometer with semiconductive transducer is known from US—A 36 36 774. Two intertial bodies are mounted for limited swinging movement about respective parallel, mutually spaced axes, with the centers of mass offset equally in a common direction from the axes. Acceleration parallel to the plane of the axes is sensed by flexure of beam structure interconnecting the bodies and carrying one or more semi-conductive strain gage elements.

It is the main object of the invention to provide a compact and reliable accelerometer which can be manufactured at low cost but with high accuracy. This is achieved by the invention as characterized in claim 1. The present invention futher makes possible the use of a silicon mounting a rebalance coil. Other magnetic, electrical or mechanical means for rebalancing the acceleration force might be used. If an electrical current flowing through a torquer coil generates the rebalancing force, the amount of this current is a measure of the acceleration to which the unit is exposed.

Unit 10 comprises a sheet or substrate 20 of single-crystal p-silicon of a desired size cut and polished to a desired thickness such as 0,254 mm. Supported on one face of this substrate by an etch stop layer 21, is an epitaxially grown layer 2₂ of n-silicon about 25,4µ in thickness.

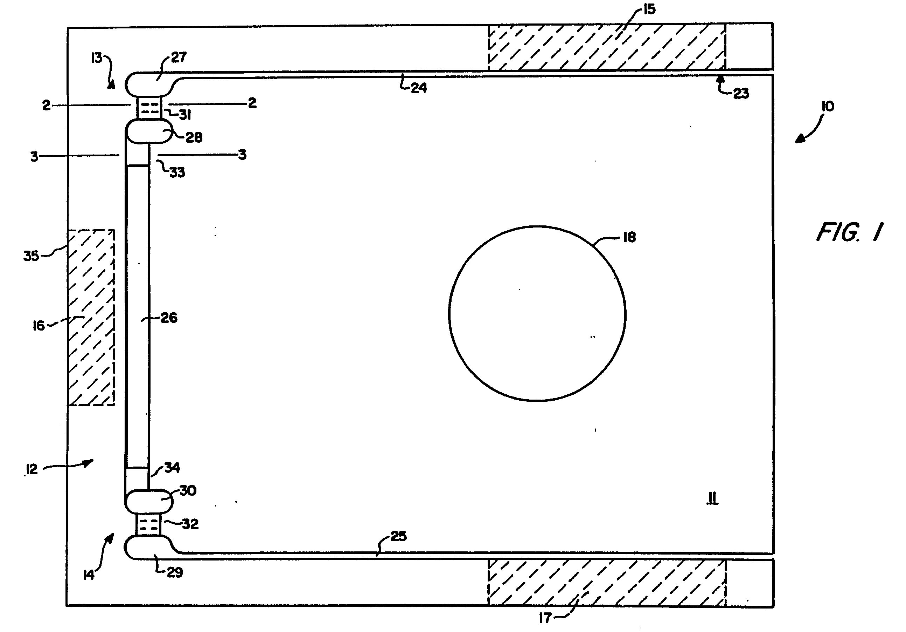

By a controlled electro-etching process the substrate is etched in a pattern shown in Figure 1 to comprise a U-shaped groove 23 between plates 11 and 12, the groove being interrupted at sites 13 and 14. Those sites are chemically protected and the etching is continued until the groove becomes a slot passing entirely through the sheet or stops at the etch stop and is subsequently cut with a laser except at the protected sites, and including narrow lateral portions 24 and 25, a broader transverse central portion 26, spaced apertures 27 and 28 at site 13, and spaced apertures 29 and 30 at site 14. The spaced apertures define outward flexures 31 and 32 and inward flexures 33 and 34 which are mutually offset as will now be described, referring to Figures 2 and 3.

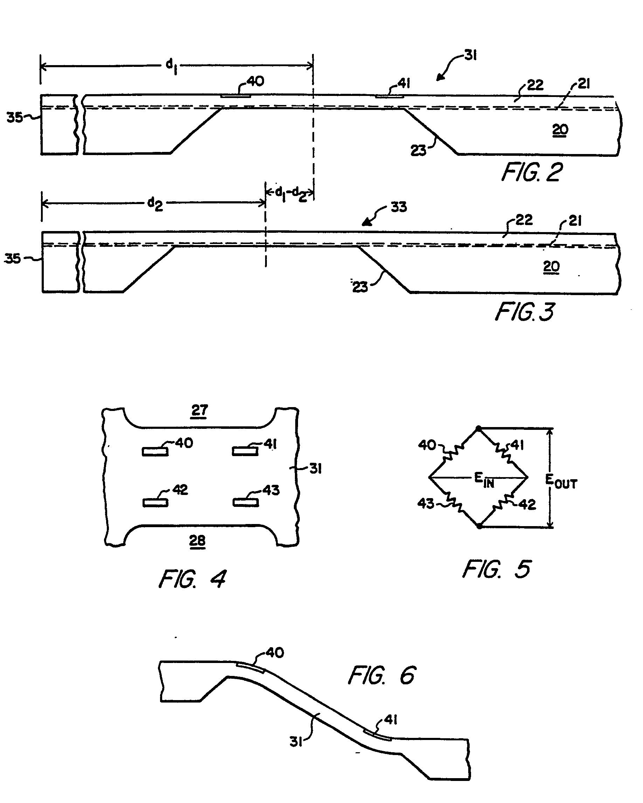

At site 13, flezure 31 is spaced from the edge 35 of plate 12 by a distance $d_1$, and flexure 33 is spaced from the edge of the plate by a distance $d_2$, so that the flexures are offset mutually by a distance $d_1$—$d_2$. The same arrangement is provided at site 14. It will be evident that if inertia plate 11 is acted on by an acceleration normal to the plate, flexures 31, 32, 33, and 34 will not bend in a simple curve, but will partake of a compound bending motion as shown diagramatically for flexure 31 in Figure 6, a first portion of the upper surface of the flexure being in tension while a second portion of the upper surface is in compression.

A plurality of strain sensitive resistors are implanted on the upper surface of flexure 31, as shown at 40, 41, 42, and 43 in Figure 4, and the upper surface of flexure 32 is similarly implanted. The resistances are interconnected in bridge circuits, as shown for flexure 31 in Figure 5. Thus, accelerations normal to plate 31 result in differential variation in the resistances of resistor 40—43 and a corresponding bridge output. On the other hand, accelerations orthogonal to that desired and hence parallel to plate 31 causes stress of the same sense in all the bridge resistances, and no bridge output results.

The space on the surface of plate 11 around bobbin 18 is available for large scale integration electronics.

From the above it will be evident that the invention discloses a silicon accelerometer in which strain senstitive resistors may be diffused or implanted on a single surface of the silicon without loss of freedom from cross-axis coupling of accelerations. In relation to the foregoing description of a particular embodiment of the invention changes may be made in detail especially in matters of shape, size, and arrangement of parts, within the invention as claimed.

## Claims

1. An accelerometer comprising an inertia plate (11) connected to a support plate (12) by means of a pair of flexure sites (13, 14) spaced along an axis, with each flexure site (13, 14) including a pair of flexúres (31, 33; 32, 34) mutually offset (d₁—d₂) so that upon acceleration in a direction perpendicular to the inertia plate (11) the flexures partake of compound bending, and further comprising strain responsive resistors (40—43) at the same surface of the flexures (31, 32) positioned so that upon bending the resistors change resistance in the opposite sense, characterized in that each flexure site (13, 14) includes an inward flexure (33, 34) and an outward flexure (31, 32) mutually offset in a direction parallel to the plane of the plate (11, 12) and both flexures (31, 33; 32, 34) of each flexure site (13, 14) are located adjacent the same side of the inertia plate (11) and of the traverse portion of a U-shaped supporting plate (12).

2. An accelerometer according to claim 1, characterized in that the inertia plate (11) is continuous with the support plate (12) at the flexure sites (13, 14) spaced along a flexure axis.

3. An accelerometer according to claim 1 or 2, characterized by means (18) provided on the inertia plate (11) for applying a rebalancing force to the inertia plate.

4. An accelerometer according to one of the preceding claims, characterized in that the support plate (12) is U-shaped with the flexure sites (13, 14) provided at the cross-bar of the U-form and that the inertia plate (11) fills the space between the side bars and the U-form.

5. An accelerometer according to one of the preceding claims, characterized by at least one pair of strain responsive resistors (40, 41; 42, 43) carried by one surface of at least one of said flexures (31, 32) and positioned so that upon said compound bending the resistance of each pair (40, 41; 42, 43) are subject to physical strains of opposite senses, while upon accelerations in directions orthogonal to said input acceleration both resistors of said pair are subject to physical strains in the same sense; and means electrically interconnecting said resistors to give an output which varies with differential changes in the resistances of said resistors.

6. An accelerometer according to one of the preceding claims, characterized in that two pairs of strain responsive resistors (40, 41; 42, 43) interconnected in a resistance bridge circuit are provided on one flexure (31, 32) of each flexure site (13, 14).

## Patentansprüche

1. Beschleunigungsmesser mit einer Trägheitsplatte (11), die mittels zweier Biegebereiche (13, 14) längs einer Achse mit einer Trägerplatte (12) verbunden sind, wobei jeder Biegebereich zwei derartig gegeneinander versetzte (d₁—d₂) Biegestellen aufweist, daß bei Beschleunigung rechtwinkelig zur Trägheitsplatte (11) die Biegestellen einer zusammengesetzten Verformung unterworfen sind, und wobei Dehnungswiderstände (40—43) auf der gleichen oberfläche der Beigestellen (31, 32) derart vorgesehen sind, daß die Widerstände ihren Widerstandswert in entgegengesetztem Sinn ändern, dadurch gekennzeichnet, daß jeder Biegebereich (13, 14) eine innere Biegestelle (33, 34) und eine äußere Biegestelle (31, 32) aufweist, die gegeneinander in einer Richtung parallel zur Ebene der Platte (11, 12) versetzt sind, und beide Biegestellen (31, 33; 32, 34) jedes Biegebereichs an der gleichen Seite der Trägheitsplatte (11) sowie am Quersteg einer U-förmigen Trägerplatte (12) angeordnet sind.

2. Beschleunigungsmesser nach Anspruch 1, dadurch gekennzeichnet, daß die Trägheitsplatte (11) an den längs einer Biegeachse angeordneten Biegebereichen (13, 14) in die Trägerplatte (12) übergeht.

3. Beschleunigungsmesser nach Anspruch 1 oder 2, gekennzeichnet durch eine an der Trägheitsplatte (11) vorgesehene Einrichtung (18) zum Ausüben einer Abgleichkraft auf die Trägheitsplatte.

4. Beschleunigungsmesser nach einem der vorangehenden Ansprüche, dadurch gekennzeichnet, daß die Trägerplatte (12) U-förmig ist und die Biegebereiche (13, 14) am Quersteg der U-Form liegen und die Trägheitsplatte (11) den Raum zwischen den Seitenschenkeln der U-Form ausfüllt.

5. Beschleunigungsmesser nach einem der vorangehenden Ansprüche, gekennzeichnet durch wenigstens ein Paar von Dehnungswiderständen (40, 41; 42, 43), welche von einer Oberfläche wenigstens einer der Biegestellen (31, 32) getragen und so angeordnet ist, daß im Zuge der zusammengesetzten Verformung der Widerstand jedes Paares (40, 41; 42, 43) physikalischen Beanspruchungen entgegengesetzter Richtung ausgesetzt ist, während bei Beschleunigungen rechtwinkelig zur Eingangsbeschleunigung beide Widerstände des Paares gleichsinnigen physikalischen Beanspruchungen unterworfen sind, und ferner gekennzeichnet durch solche elektrische Verbindungen zwischen den Widerständen daß ein Ausgangssignal sich in Abhängigkeit von der differentiellen Widerstandsänderung der Widerstände ändert.

6. Beschleunigungsmesser nach einem der vorangehenden Ansprüche, dadurch gekennzeichnet, daß zwei Paare von Dehnungswiderständen (40, 41; 42, 43) zu einer Widerstandsbrücke zusammengeschaltet und auf einer Biegestelle (31, 32) jedes Biegebereichs (13, 14) angeordnet sind.

**Revendications**

1. Accéléromètre comprenant une plaque d'inertie (11) reliée à une plaque de support (12) au moyen d'une paire de points de flexion (13, 14) espacés le long d'un axe, chaque point de flexion (13, 14) comprenant une paire de flexions (31, 33; 32, 34) mutuellement décalées ($d_1$—$d_2$) de sorte que lors d'une accélération dans une direction perpendiculaire à la plaque d'inertie (11) les flexions participent à un cintrage composé, et comprenant en outre des résistances sensibles à la contrainte (40 à 43) à la même surface que les flexions (31, 32) et positionnées de sorte que lors d'un cintrage les résistances changent de résistance dans le sens opposé, caractérisé en ce que chaque point de flexion (13, 14) comprend une flexion vers l'intérieur (33, 34) et une flexion vers l'extérieur (31, 32) mutuellement décalées selon une direction parallèle au plan de la plaque (11, 12) et les deux flexions (31, 33; 32, 34) de chaque point de flexion (13, 14) sont situées de manière adjacente au même côté de la plaque d'inertie (11) et de la partie tranversante d'une plaque de support en forme de U (12).

2. Accéléromètre selon la revendication 1, caractérisé en ce que la plaque d'inertie (11) et la plaque de support (12) s'étendent en continuité aux points de flexion (13, 14) espacés le long d'un ace de flexion.

3. Accéléromètre selon l'une des revendications 1 ou 2, caractérisé par des moyens (18) prévus sur la plaque d'intertie (11) pour appliquer une force de rééquilibrage à la plaque d'inertie.

4. Accéléromètre selon l'une des revendications précédentes, caractérisé en ce que la plaque de support (12) est conformée en U, les points de flexion (13, 14) étant prévus sur la barre traversante du U, et en ce que la plaque d'inertie (11) remplit l'espace entre les barres latérales du U.

5. Accéléromètre selon l'une des revendications précédentes, caractérisé par au moins une paire de résistances sensibles à la contrainte (40, 41; 42, 43) portées par une surface d'au moins l'une desdites flexions (31, 32) et placées de sorte que lors dudit cintrage composé, les résistances de chaque paire (40, 41; 42, 43) sont soumises à des contraintes physiques de directions opposées, tandis que lors d'accélérations selon des directions orthogonales à ladite accélération d'entrée, les deux résistances de ladite paire sont soumises à des contraintes physiques selon la même direction; et par des moyens interconnectant électriquement lesdites résistances pour délivrer une sortie qui varie en fonction des modifications différentielles des valeurs de résistance desdites résistances.

6. Accéléromètre selon l'une des revendications précédentes, caractérisé en ce que les deux paires de résistances sensibles à la contrainte (40, 41; 42, 43) interconnectées dans un circuit formant pont de résistances, sont prévues sur une flexion (31, 32) de chaque point de flexion (13, 14).

FIG. 1

FIG. 2

FIG.3

FIG. 4

FIG. 5

FIG. 6